# EUROPEAN PATENT APPLICATION

(11) **EP 4 687 048 A1**
(43) Date of publication of application: **04.02.2026**
(21) Application number: 25153081.2
(22) Date of filing: 21.01.2025
(51) Int. Cl.: G06F 16/903, G06F 16/9035, G06F 16/901

(54) **FABRIC SEARCHING SYSTEM**

(30) Priority: 29.07.2024 TW 113128188
(71) Applicant: TAIWAN TEXTILE RESEARCH INSTITUTE, New Taipei City (TW)
(72) Inventor: YIN, Cheng-Ta, New Taipei City (TW); SHEN, Pei-Te, New Taipei City (TW); LIN, Hon-Yu, New Taipei City (TW); YEH, Ching, New Taipei City (TW); CIOU, Yu-Sian, New Taipei City (TW); CHEN, Yi-Ting, New Taipei City (TW)
(74) Representative: Winter, Brandl - Partnerschaft mbB

(57) **Abstract**

A fabric searching system includes: a memory storing a fabric database and a user database corresponding to user information; a processor selecting, in the fabric database, a first fabric data group conformed to a first fabric searching condition, and store a first selected fabric data group in the first fabric data group into the user database according to the user information; and a display displaying the first fabric data group, in which after the first selected fabric data group is stored into the user database, the processor selects, in the fabric database, a second fabric data group conformed to a second fabric searching condition, and arranging the second fabric data group according to the first selected fabric data group, and the display displays the second fabric data group which is arranged according to the first selected fabric data group.

## Description

### BACKGROUND

### Technical Field

The present disclosure relates to a fabric searching technology. More particularly, the present disclosure relates to a fabric searching system.

### Description of Related Art

Fabric information cannot present physical features of fabrics; in order to know fabric features, manual measurements must be performed to the fabrics; the manual measurements have higher costs and consume longer time. Thus, techniques associated with the development for overcoming problems described above are important issues in the field.

### SUMMARY

The present disclosure provides a fabric searching system. The fabric searching system includes: a memory configured to store a fabric database and a user database corresponding to user information; a processor configured to select, in the fabric database, a first fabric data group conformed to a first fabric searching condition, and store a first selected fabric data group in the first fabric data group into the user database according to the user information; and a display configured to display the first fabric data group, in which after the first selected fabric data group is stored into the user database, the processor selects, in the fabric database, a second fabric data group conformed to a second fabric searching condition, and arranging the second fabric data group according to the first selected fabric data group, and the display is further configured to display the second fabric data group which is arranged according to the first selected fabric data group.

It is to be understood that both the foregoing general description and the following detailed description are by examples, and are intended to provide further explanation of the disclosure as claimed.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
FIG. 1 is a schematic diagram of a fabric searching system illustrated according to some embodiment of this disclosure.
FIG. 2A is a schematic diagram of a display illustrated according to some embodiment of this disclosure.
FIG. 2B is a schematic diagram of the display illustrated according to some embodiment of this disclosure.
FIG. 3A is a schematic diagram of the display illustrated according to some embodiment of this disclosure.
FIG. 3B is a schematic diagram of the display illustrated according to some embodiment of this disclosure.
FIG. 4A is a schematic diagram of the display illustrated according to some embodiment of this disclosure.
FIG. 4B is a schematic diagram of the display illustrated according to some embodiment of this disclosure.
FIG. 5A is a schematic diagram of the display illustrated according to some embodiment of this disclosure.
FIG. 5B is a schematic diagram of the display illustrated according to some embodiment of this disclosure.
FIG. 6 is a schematic diagram of the display illustrated according to some embodiment of this disclosure.
FIG. 7A is a schematic diagram of the display illustrated according to some embodiment of this disclosure.
FIG. 7B is a schematic diagram of the display illustrated according to some embodiment of this disclosure.
FIG. 7C is a schematic diagram of the display illustrated according to some embodiment of this disclosure.

### DETAILED DESCRIPTION

In the present disclosure, although the terms "first", "second", and the like are used in the present disclosure to describe different elements, the terms are used only to distinguish the elements or operations described in the same technical terms. The use of the term is not intended to be a limitation of the present disclosure.

Unless otherwise defined, all terms (including technical and scientific terms) used in the present disclosure have the same meaning as commonly understood by the ordinary skilled person to which the concept of the present invention belongs. It will be further understood that terms (such as those defined in commonly used dictionaries) should be interpreted as having a meaning consistent with its meaning in the related technology and/or the context of this specification and not it should be interpreted in an idealized or overly formal sense, unless it is clearly defined as such in this article.

The terms used in the present disclosure are only used for the purpose of describing specific embodiments and are not intended to limit the embodiments. As used in the present disclosure, the singular forms "a", "one" and "the" are also intended to include plural forms, unless the context clearly indicates otherwise. It will be further understood that when used in this specification, the terms "comprises (comprising)" and/or "includes (including)" designate the existence of stated features, steps, operations, elements and/or components, but the existence or addition of one or more other features, steps, operations, elements, components, and/or groups thereof are not excluded.

Hereinafter multiple embodiments of the present disclosure will be disclosed with schema, as clearly stated, the details in many practices it will be explained in the following description. It should be appreciated, however, that the details in these practices is not applied to limit the present disclosure. Also, it is to say, in some embodiments of the present disclosure, the details in these practices are non-essential. In addition, for the sake of simplifying schema, some known usual structures and element in the drawings by a manner of simply illustrating for it.

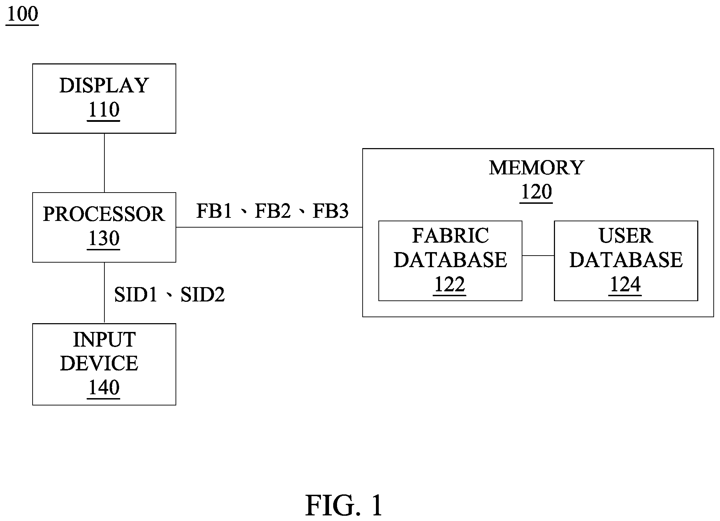

FIG. 1 is a schematic diagram of a fabric searching system 100 illustrated according to some embodiment of this disclosure. As illustratively shown in FIG. 1, the fabric searching system 100 includes a display 110, a memory 120, a processor 130 and an input device 140.

In some embodiments, the memory 120 is configured to store a fabric database 122 and a user database 124 corresponding to user information SID1. In various embodiments, the memory 120 can store various quantities of user databases corresponding to various quantities of user information.

In some embodiments, the input device 140 is configured to provide the user information SID1, an user identity signal SID2, a first fabric searching condition and a second fabric searching condition to the processor 130. In some embodiments, the input device 140 can be implemented by keyboard, mouse, touchscreen and/or other types of input devices.

In some embodiments, a first fabric searching condition includes a first condition, a second condition and a third condition different from each other. For example, the first condition, the second condition and the third condition can correspond to fabric texture characteristic data, fabric application data and fabric specification data, respectively.

In some embodiments, the processor 130 is configured to select, in the fabric database 122, a first fabric data group FB1 conformed to the first fabric searching condition, and store a first selected fabric data group in the first fabric data group FB1 into the user database 124 according to the user information SID1. In some embodiments, the display 110 is configured to display the first fabric data group FB1.

For example, the processor can compare the first fabric searching condition and fabric texture characteristic data, fabric application data and fabric specification data of fabric data in the fabric database 122, and select the fabric data conforming the first fabric searching condition as the first fabric data group FB1. Then, the display 110 is configured to display the first fabric data group FB1 for user selection. After the user selects the first selected fabric data group from the first fabric data group FB1 by the input device 140, the input device 140 provides information of the first selected fabric data group to the processor 130, such that the processor 130 stores the first selected fabric data group to the user database 124 corresponding to the user information SID1.

In some embodiments, after the first selected fabric data group is stored into the user database 124, the processor 130 is further configured to select, in the fabric database 122, a second fabric data group FB2 conformed to a second fabric searching condition, and arrange the second fabric data group FB2 according to the first selected fabric data group. The display 110 is further configured to display the second fabric data group FB2 which is arranged according to the first selected fabric data group.

For example, after the first selected fabric data group is stored into the user database 124, the input device 140 provides the user information SID1 and the second fabric searching condition to the processor 130, which presents that the user corresponding to the user information SID1 starts to perform searching of the second fabric searching condition.

Then, the processor 130 compares the second fabric searching condition and the fabric texture characteristic data, the fabric application data and the fabric specification data of the fabric data in the fabric database 122, and select the fabric data conforming the second fabric searching condition as the second data group FB2. At this moment, the processor 130 arranges the second fabric data group FB2 according to the first selected fabric data group, such that the display 110 can display the second fabric data group FB2 which is arranged according to the first selected fabric data group. Then, the display 110 can display the second fabric data group FB2 which is arranged according to the first selected fabric data group for user selection.

In some approaches, each time performing fabric searching, users need professional textile background and a lot of time to select fabric data conforming requirements from a lot of fabric data. As a result, the manpower cost is high and the consumed time is more.

Compared to above approaches, in some embodiments of present disclosure, when the user corresponding to the user information SID1 performs searching with the second fabric searching condition, the processor 130 arranges the second fabric data group FB2 according to the first selected fabric data group which select by the user before. As a result, the display 110 can display the fabric data which conforms the user requirements in prior, to save time and reduce the cost.

In some embodiments, after the user selects the second selected fabric data group from the second fabric data group by the input device 140, the input device 140 provides the information of the second selected fabric data group to the processor 130, such that the processor 130 stores the second selected fabric data group to the user database 124 corresponding to the user information SID1.

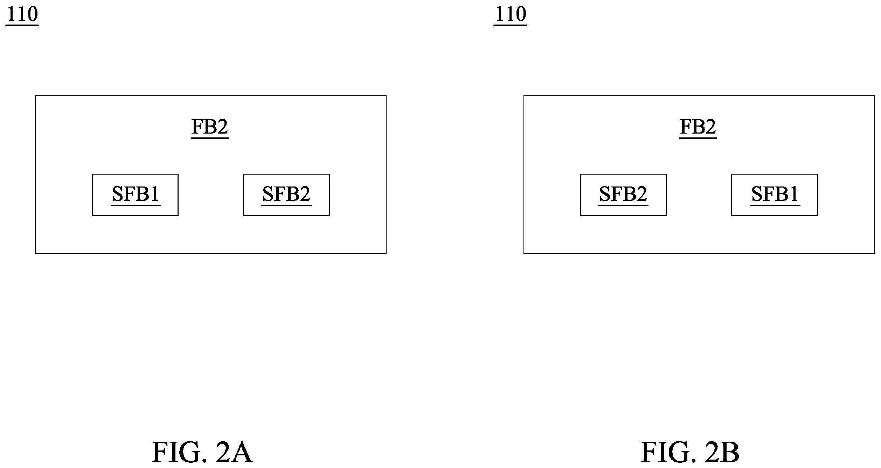

FIG. 2A is a schematic diagram of the display 110 illustrated according to some embodiment of this disclosure. As illustratively shown in FIG. 2A, the display 110 is configured to display the second fabric data group FB2. In which the second fabric data group FB2 includes a first fabric data set SFB1 and a second fabric data set SFB2. In some embodiments, the processor 130 arranges the first fabric data set SFB1 and the second fabric data set SFB2 according to the first selected fabric data group.

In some embodiments, the first selected fabric data group includes a first selected data set having a first fabric feature and a second selected data set having a second fabric feature. The first fabric feature and the second fabric feature are different from each other.

For example, the first fabric feature and the second fabric feature correspond to fabric texture feature data different from each other. The fabric texture feature data includes at least one of softness, smoothness, warmth, drape, filling power and resilience. Alternatively stated, at least one of softness, smoothness, warmth, drape, filling power and resilience of the first selected data set is different from a corresponding one of the second selected data set.

In some embodiments, the first fabric data set SFB1 and the second fabric data set SFB2 have the first fabric feature and the second fabric feature, respectively.

In some embodiments, the processor 130 is further configured to compare a first fabric quantity of the first selected data set and a second fabric quantity of the second selected data set. When the first fabric quantity is larger than the second fabric quantity, the processor 130 arranges the first fabric data set SFB1 in front of the second fabric data set SFB2, such as the condition shown in FIG. 2A. When the first fabric quantity is smaller than the second fabric quantity, the processor 130 arranges the first fabric data set SFB1 behind the second fabric data set SFB2, such as the condition shown in FIG. 2B.

In the embodiment shown in FIG. 2A, the first fabric quantity is larger than the second fabric quantity. Correspondingly, the processor 130 arranges the first fabric data set SFB1 and the second fabric data set SFB2 on the display 110 from left to right in order.

In various embodiments, the processor 130 can perform various arrangements. For example, the processor 130 can arranges the first fabric data set SFB1 and the second fabric data set SFB2 on the display 110 from up to down in order. For example, the processor 130 can display the first fabric data set SFB1 and the second fabric data set SFB2 on the display 110 in time in order.

FIG. 2B is a schematic diagram of the display 110 illustrated according to some embodiment of this disclosure. As illustratively shown in FIG. 2B, the display 110 is configured to display the second fabric data group FB2.

In the embodiment shown in FIG. 2B, the first fabric quantity is smaller than the second fabric quantity. Correspondingly, the processor 130 arranges the second fabric data set SFB2 and the first fabric data set SFB1 on the display 110 from left to right in order.

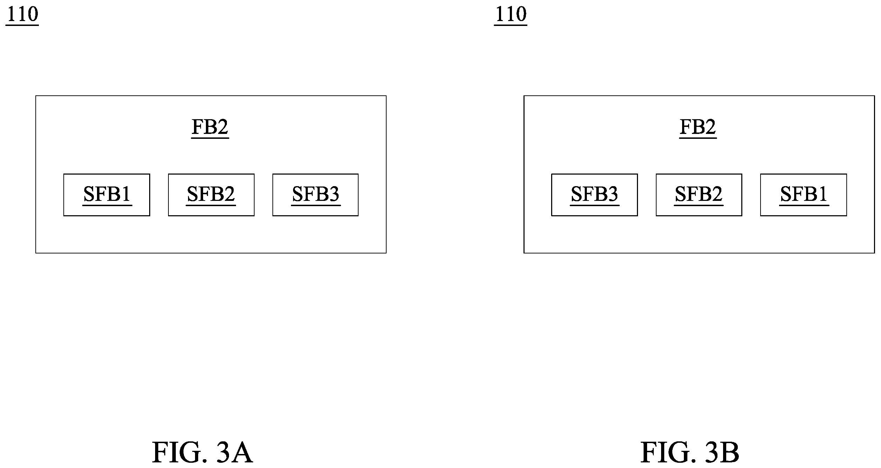

FIG. 3A is a schematic diagram of the display 110 illustrated according to some embodiment of this disclosure. As illustratively shown in FIG. 3A, the display 110 is configured to display the second fabric data group FB2. In which the second fabric data group FB2 further includes a third fabric data set SFB3. In some embodiments, the processor 130 arranges the first fabric data set SFB1, the second fabric data set SFB2 and the third fabric data set SFB3 according to the first selected fabric data group.

In some embodiments, the first selected fabric data group further includes a third selected data set having a third fabric feature. The third fabric feature is different from the first fabric feature and is different from the second fabric feature. For example, the first fabric feature, the second fabric feature and the third fabric feature correspond to fabric texture feature data different from each other. In some embodiments, the third fabric data set SFB3 has the third fabric feature.

In some embodiments, processor 130 is configured to compare the first fabric quantity, the second fabric quantity and a third fabric quantity of the third selected data set SFB3. When the first fabric quantity is larger than the second fabric quantity and the second fabric quantity is larger than the third fabric quantity, the processor 130 arranges the first fabric data set SFB1, the second fabric data set SFB2 and the third fabric data set SFB3 in order, such as the condition shown in FIG. 3A. When the first fabric quantity is smaller than the second fabric quantity and the second fabric quantity is smaller than the third fabric quantity, the processor 130 arranges the third fabric data set SFB3, the second fabric data set SFB2 and the first fabric data set SFB1 in order, such as the condition shown in FIG. 3B.

In the embodiment shown in FIG. 3A, the first fabric quantity is larger than the second fabric quantity and the second fabric quantity is larger than the third fabric quantity. Correspondingly, the processor 130 arranges the first fabric data set SFB1, the second fabric data set SFB2 and the third fabric data set SFB3 on the display 110 from left to right in order.

FIG. 3B is a schematic diagram of the display 110 illustrated according to some embodiment of this disclosure. As illustratively shown in FIG. 3B, the display 110 is configured to display the second fabric data group FB2.

In the embodiment shown in FIG. 3B, the first fabric quantity is smaller than the second fabric quantity and the second fabric quantity is smaller than the third fabric quantity. Correspondingly, the processor 130 arranges the third fabric data set SFB3, the second fabric data set SFB2 and the first fabric data set SFB1 on the display 110 from left to right in order.

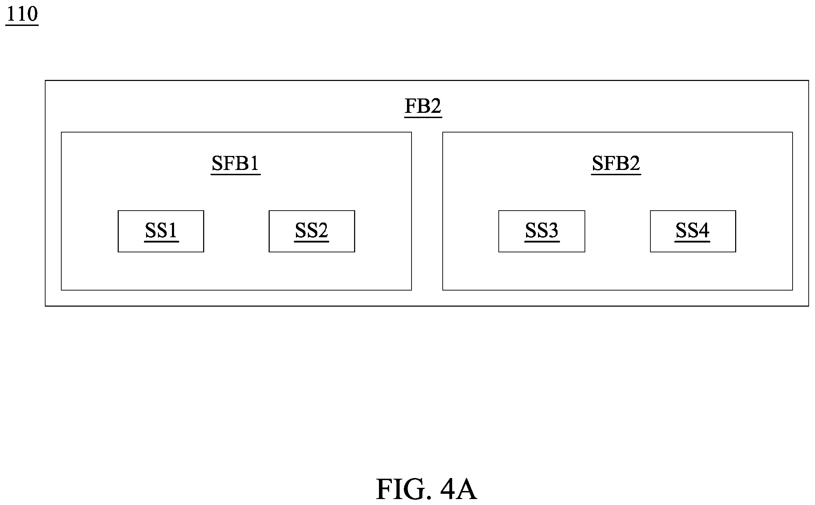

FIG. 4A is a schematic diagram of the display illustrated according to some embodiment of this disclosure. As illustratively shown in FIG. 4A, the display 110 is configured to display the second fabric data group FB2. In which the first fabric data set SFB1 includes a first subset SS1 and a second subset SS2, and the second fabric data set SFB2 includes a third subset SS3 and a fourth subset SS4. In some embodiments, the processor 130 arranges the first subset SS1, the second subset SS2, the third subset SS3 and the fourth subset SS4 according to the first selected fabric data group.

In some embodiments, the first selected fabric data group further includes a fourth selected data set having a fourth fabric feature and a fifth selected data set having a fifth fabric feature. The fourth fabric feature and the fifth fabric feature are different from each other.

For example, the fourth fabric feature and the fifth fabric feature are fabric application data. The fabric application data includes at least one of running feature data, training feature data, yoga feature data, bicycle feature data, traveling feature data are other feature data. In some embodiments, the fabric application data is the data inputted into the memory 120 in advance and stored in the fabric database 122. In some embodiments, the fabric application data is the data provided by fabric factories.

In some embodiments, the first subset and the second subset have the fourth fabric feature and the fifth fabric feature, respectively. The third subset and the fourth subset have the fourth fabric feature and the fifth fabric feature, respectively.

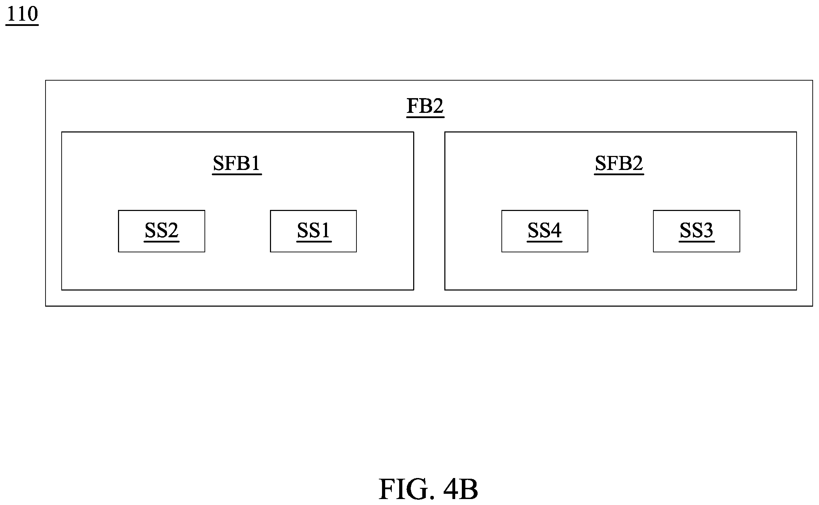

In some embodiments, the processor 130 is configured to compare a fourth fabric quantity of the fourth selected data set and a fifth fabric quantity of the fifth selected data set. When the fourth fabric quantity is larger than the fifth fabric quantity, the processor 130 arranges the first subset SS1 in front of the second subset SS2, and arranges the third subset SS3 in front of the fourth subset SS4, such as the condition shown in FIG. 4A. When the fourth fabric quantity is smaller than the fifth fabric quantity, the processor 130 arranges the first subset SS1 behind the second subset SS2, and arranges the third subset SS3 behind the fourth subset SS4, such as the condition shown in FIG. 4B.

In the embodiment shown in FIG. 4A, the fourth fabric quantity is larger than the fifth fabric quantity. Correspondingly, the processor 130 arranges the first subset SS1, the second subset SS2, the third subset SS3 and the fourth subset SS4 on the display from left to right in order.

In various embodiments, the processor 130 can perform various arrangements. For example, the processor 130 can arranges the first subset SS1, the second subset SS2, the third subset SS3 and the fourth subset SS4 on the display 110 from up to down in order. For example, the processor 130 can display the first subset SS1, the second subset SS2, the third subset SS3 and the fourth subset SS4 on the display 110 in time in order.

FIG. 4B is a schematic diagram of the display illustrated according to some embodiment of this disclosure. As illustratively shown in FIG. 4B, the display 110 is configured to display the second fabric data group FB2.

In the embodiment shown in FIG. 4B, the fourth fabric quantity is smaller than the fifth fabric quantity. Correspondingly, the processor 130 arranges the second subset SS2, the first subset SS1, the fourth subset SS4 and the third subset SS3 on the display from left to right in order.

In some embodiments, a category of the first fabric feature of the first fabric data set SFB1 and the second fabric feature of the second fabric data set SFB2 is different from a category of the fourth fabric feature and the fifth fabric feature. For example, the first fabric feature and the second fabric feature correspond to the fabric texture characteristic data, and the fourth fabric feature and the fifth fabric feature correspond to the fabric application data.

Alternatively stated, the processor 130 arranges the first fabric data set SFB1 and the second fabric data set SFB2 according to the fabric texture characteristic data at first. Then, the processor 130 arranges the first subset SS1 and the second subset SS2 in the first fabric data set SFB1 and the third subset SS3 and the fourth subset SS4 in the second fabric data set SFB2.

In some embodiments, for the user, requirements of the fabric texture characteristic data are prior to requirements of the fabric application data. As a result, with the arrangements of FIG. 4A and FIG. 4B, the display 110 can display the fabric data matching the user requirements in prior, such the searching efficiency is improved.

In some embodiments, a sequence of consideration of the fabric features for the user is the fabric texture characteristic data, the fabric application data, the fabric specification data, the fabric touch characteristic data, the fabric color image data and the fabric supplier data. Correspondingly, the processor 130 arranges the second fabric group FB2 according to the sequence above.

In some embodiments, the fabric specification data includes at least one of fabric composition data, fabric composition ratio data, fabric type data, fabric weave data, fabric elasticity data, fabric dyeing data and fabric finishing data.

In some embodiments, the fabric touch characteristic data is the data generated by performing measurements to the fabric with a fabric touch tester (FTT).

In some embodiments, the fabric color image data includes at least one of fabric color data and fabric image data.

In some embodiments, the first fabric feature, the second fabric feature and the third fabric feature correspond to fabric texture characteristic data and the fourth fabric feature and the fifth fabric feature correspond to fabric application data.

In some embodiments, the first fabric feature, the second fabric feature and the third fabric feature correspond to fabric application data and the fourth fabric feature and the fifth fabric feature correspond to fabric specification data.

In some embodiments, the first fabric feature, the second fabric feature and the third fabric feature correspond to fabric specification data and the fourth fabric feature and the fifth fabric feature correspond to fabric touch characteristic data.

In some embodiments, the first fabric feature, the second fabric feature and the third fabric feature correspond to fabric touch characteristic data and the fourth fabric feature and the fifth fabric feature correspond to fabric color image data.

In some embodiments, the first fabric feature, the second fabric feature and the third fabric feature correspond to fabric color image data and the fourth fabric feature and the fifth fabric feature correspond to fabric supplier data.

In various embodiments, when the first fabric feature, the second fabric feature and the third fabric feature correspond to fabric texture characteristic data, the fourth fabric feature and the fifth fabric feature can correspond to anyone of the fabric application data, the fabric specification data, the fabric touch characteristic data, the fabric color image data and the fabric supplier data.

In various embodiments, when the first fabric feature, the second fabric feature and the third fabric feature correspond to the fabric application data, the fourth fabric feature and the fifth fabric feature can correspond to anyone of the fabric specification data, the fabric touch characteristic data, the fabric color image data and the fabric supplier data.

In various embodiments, when the first fabric feature, the second fabric feature and the third fabric feature correspond to the fabric specification data, the fourth fabric feature and the fifth fabric feature can correspond to anyone of the fabric touch characteristic data, the fabric color image data and the fabric supplier data.

In various embodiments, when the first fabric feature, the second fabric feature and the third fabric feature correspond to the fabric touch characteristic data, the fourth fabric feature and the fifth fabric feature can correspond to anyone of the fabric color image data and the fabric supplier data.

In some approaches, when searching fabric is performed, a processor does not arrange the searched data according to various data features of the fabric. As a result, the time consumed for searching required data is longer.

Compared to above approaches, in some embodiments of present disclosure, the processor 130 arranges the searched fabric data in multilevel according to various fabric features with the specific priority described above. As a result, the efficiency of searching desired fabric is increased.

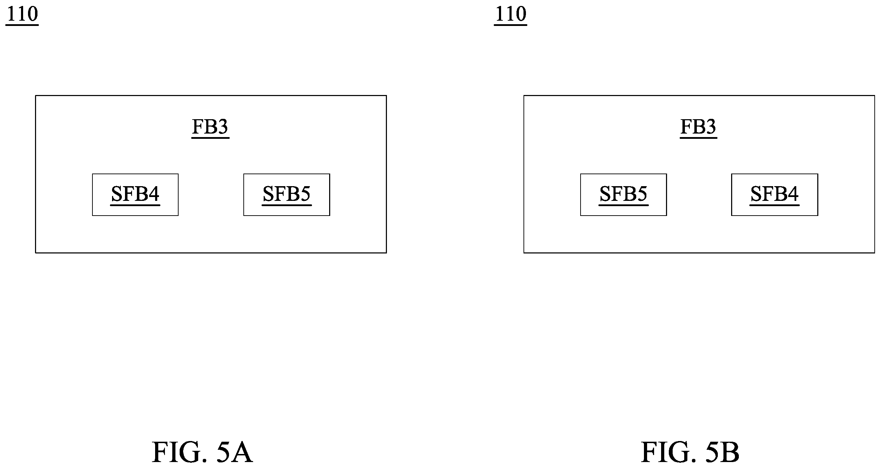

FIG. 5A is a schematic diagram of the display 110 illustrated according to some embodiment of this disclosure. As illustratively shown in FIG. 5A, the display 110 is configured to display the third fabric data group FB3. In which the third fabric data group FB3 includes a fourth fabric data set SFB4 and a fifth fabric data set SFB5.

Referring to FIG. 5A and FIG. 1, in some embodiments, the processor 130 is further configured to store the second selected fabric data group in the second fabric data group FB2 into the user database 124. After the second selected fabric data group is stored into the user database 124, the processor 130 is further configured to select, in the fabric database 122, the third fabric data group FB3 conformed to a third fabric searching condition, and arrange the third fabric data group FB3 according to the first selected fabric data group and the second selected fabric data group. The display 110 is further configured to display the third fabric data group which is arranged according to the first selected fabric data group and the second selected fabric data group.

In some embodiments, the second selected fabric data group includes a sixth selected data set having the first fabric feature and a seventh selected data set having the second fabric feature.

In some embodiments, the fourth fabric data set SFB4 and the fifth fabric data set SFB5 have the first fabric feature and the second fabric feature, respectively.

In some embodiments, the processor 130 is further configured to sum a sixth fabric quantity of the sixth selected data set and the first fabric quantity to generate a first total fabric quantity, and the processor 130 is further configured to sum a seventh fabric quantity of the seventh selected data set and the second fabric quantity to generate a second total fabric quantity.

Alternatively stated, the first total fabric quantity is a quantity of fabrics having the first fabric feature in the first selected fabric data group and the second selected fabric data group, and the second total fabric quantity is a quantity of fabrics having the second fabric feature in the first selected fabric data group and the second selected fabric data group.

In some embodiments, the processor 130 is further configured to compare the first total fabric quantity and the second total fabric quantity. When the first total fabric quantity is larger than the second total fabric quantity, the processor arranges the fourth fabric data set SFB4 in front of the fifth fabric data set SFB5, such as the condition shown in FIG. 5A. When the first total fabric quantity is smaller than the second total fabric quantity, the processor 130 arranges the fourth fabric data set SFB4 behind the fifth fabric data set SFB5, such as the condition shown in FIG. 5B.

In the embodiment shown in FIG. 5A, the first total fabric quantity is larger than the second total fabric quantity. Correspondingly, the processor 130 arranges the fourth fabric data set SFB4 and the fifth fabric data set SFB5 on the display 110 from left to right in order.

FIG. 5B is a schematic diagram of the display illustrated according to some embodiment of this disclosure. As illustratively shown in FIG. 5B, the display 110 is configured to display the third fabric data group FB3.

In the embodiment shown in FIG. 5B, the first total fabric quantity is smaller than the second total fabric quantity. Correspondingly, the processor 130 arranges the fifth fabric data set SFB5 and the fourth fabric data set SFB4 on the display 110 from left to right in order.

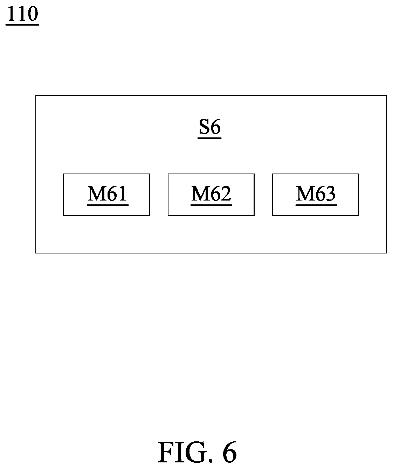

FIG. 6 is a schematic diagram of the display 110 illustrated according to some embodiment of this disclosure. As illustratively shown in FIG. 6, the display 110 is configured to display a picture S6. In which the picture S6 includes a first image M61, a second image M62 and a third image M63 different from each other. In some embodiments, the first image M61, the second image M62 and the third image M63 correspond to three different user identities, such as designers, salesperson, and cloth factory.

In some embodiments, the input device 140 is configured to provide the user identity signal SID2 to the processor 130. The user identity signal SID2 corresponds to one of the first image M61, the second image M62 and the third image M63, and is configured to indicate the user identity.

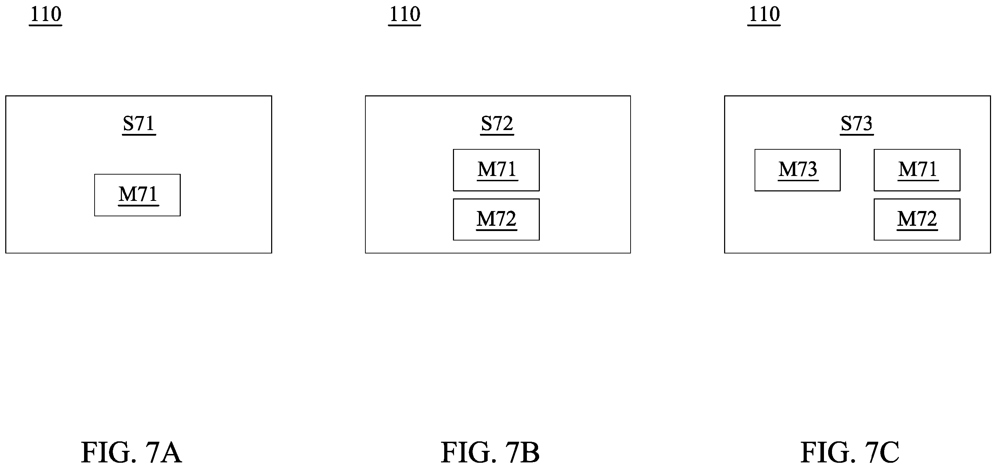

FIG. 7A is a schematic diagram of the display 110 illustrated according to some embodiment of this disclosure. As illustratively shown in FIG. 7A, the display 110 is further configured to display a first search condition picture S71. In which the first search condition picture S71 includes a first condition control image M71.

Referring to FIG. 1, FIG. 6 and FIG. 7A, in some embodiments, in response to the user identity signal SID2 corresponding to the first image M61, the processor 130 controls the display 110 to display the first search condition picture S71. Alternatively stated, when the user identity signal SID2 corresponds to the user identity represented by the first image M61, the display 110 to display the first search condition picture S71.

FIG. 7B is a schematic diagram of the display 110 illustrated according to some embodiment of this disclosure. As illustratively shown in FIG. 7B, the display 110 is further configured to display a second search condition picture S72. In which the second search condition picture S72 includes the first condition control image M71 and a second condition control image M72.

Referring to FIG. 1, FIG. 6 and FIG. 7B, in some embodiments, in response to the user identity signal SID2 corresponding to the second image M62, the processor 130 controls the display 110 to display the second search condition picture S72. Alternatively stated, when the user identity signal SID2 corresponds to the user identity represented by the second image M62, the display 110 to display the second search condition picture S72.

FIG. 7C is a schematic diagram of the display 110 illustrated according to some embodiment of this disclosure. As illustratively shown in FIG. 7C, the display 110 is further configured to display a third search condition picture S73. In which the third search condition picture S73 includes the first condition control image M71, the second condition control image M72 and a third condition control image M73.

Referring to FIG. 1, FIG. 6 and FIG. 7C, in some embodiments, in response to the user identity signal SID2 corresponding to the third image M63, the processor 130 controls the display 110 to display the third search condition picture S73. Alternatively stated, when the user identity signal SID2 corresponds to the user identity represented by the third image M63, the display 110 to display the third search condition picture S73.

In some embodiments, the first condition control image M71, the second condition control image M72 and the third condition control image M73 corresponds to the first condition, the second condition and the third condition in the first fabric searching condition, respectively. The first condition, the second condition and the third condition are different from each other. For example, the first condition, the second condition and the third condition correspond to the fabric texture characteristic data, the fabric application data and the fabric specification data, respectively.

In some embodiments, the second search condition picture S72 does not include the third condition control image M73, and the first search condition picture S71 does not include the third condition control image M73 and the second condition control image M72.

In some circumstances, the user may not have professional textile background, and search fabrics conforming requirements with target texture, for example, the user is the designer. At this moment, the display 110 only need to display the first condition control image M71 corresponding to the fabric texture characteristic data for the designer inputting conditions.

In some other circumstances, the user may not have professional textile background but understand the fabric application, and search fabrics conforming requirements to satisfying customer requirements such as application, fabric type, price, for example, the user is the salesperson. At this moment, the display 110 only need to display the first condition control image M71 and the second condition control image M72 corresponding to the fabric application data for the salesperson inputting conditions.

In some other circumstances, the user may have professional textile background and understand the fabric application, and have requirements of developing and generating fabrics, for example, the user is the cloth factory. At this moment, the display 110 display the first condition control image M71, the second condition control image M72 and the third condition control image M73 for the cloth factory inputting conditions.

In some approaches, when searching fabric is performed, a display displays all the condition control images of fabric data for user inputting conditions. As a result, high computation is required.

Compared to above approaches, in some embodiments of preset disclosure, the processor 130 controls the display 110 to display the first search condition picture S71, the second search condition picture S72 and the third search condition picture S73 according to the different user identity signals SID2. As a result, in the circumstances displaying the first search condition picture S71 and the second search condition picture S72, computation can be reduced.

## Claims

1. A fabric searching system (100), comprising:
a memory (120) configured to store a fabric database (122) and a user database (124) corresponding to user information (SID1);
a processor (130) configured to select, in the fabric database, a first fabric data group (FB1) conformed to a first fabric searching condition, and store a first selected fabric data group in the first fabric data group into the user database according to the user information; and
a display (110) configured to display the first fabric data group,
wherein after the first selected fabric data group is stored into the user database, the processor is further configured to select, in the fabric database, a second fabric data group (FB2) conformed to a second fabric searching condition, and arrange the second fabric data group according to the first selected fabric data group, and
the display is further configured to display the second fabric data group which is arranged according to the first selected fabric data group.

2. The fabric searching system of claim 1, wherein
the first selected fabric data group includes a first selected data set having a first fabric feature and a second selected data set having a second fabric feature,
the first fabric feature and the second fabric feature are different from each other,
the second fabric data group includes a first fabric data set (SFB1) having the first fabric feature and a second fabric data set (SFB2) having the second fabric feature,
the processor is further configured to compare a first fabric quantity of the first selected data set and a second fabric quantity of the second selected data set,
when the first fabric quantity is larger than the second fabric quantity, the processor arranges the first fabric data set in front of the second fabric data set,
when the first fabric quantity is smaller than the second fabric quantity, the processor arranges the first fabric data set behind the second fabric data set.

3. The fabric searching system of claim 2, wherein
the first selected fabric data group further includes a third selected data set having a third fabric feature,
the third fabric feature is different from the first fabric feature, and is different from the second fabric feature,
the second fabric data group further includes a third fabric data set (SFB3) having the third fabric feature,
the processor is further configured to compare the first fabric quantity, the second fabric quantity and a third fabric quantity of the third selected data set,
when the first fabric quantity is larger than the second fabric quantity and the second fabric quantity is larger than the third fabric quantity, the processor arranges the first fabric data set, the second fabric data set and the third fabric data set in order, and
when the first fabric quantity is smaller than the second fabric quantity and the second fabric quantity is smaller than the third fabric quantity, the processor arranges the third fabric data set, the second fabric data set and the first fabric data set in order.

4. The fabric searching system of claim 3, wherein
the first selected fabric data group further includes a fourth selected data set having a fourth fabric feature and a fifth selected data set having a fifth fabric feature,
the fourth fabric feature and the fifth fabric feature are different from each other,
the first fabric data set includes a first subset (SS1) having the fourth fabric feature and a second subset (SS2) having the fifth fabric feature,
the processor is further configured to compare a fourth fabric quantity of the fourth selected data set and a fifth fabric quantity of the fifth selected data set,
when the fourth fabric quantity is larger than the fifth fabric quantity, the processor arranges the first subset in front of the second subset,
when the fourth fabric quantity is smaller than the fifth fabric quantity, the processor arranges the first subset behind the second subset.

5. The fabric searching system of claim 4, wherein
the second fabric data set includes a third subset (SS3) having the fourth fabric feature and a fourth subset (SS4) having the fifth fabric feature,
when the fourth fabric quantity is larger than the fifth fabric quantity, the processor arranges the third subset in front of the fourth subset,
when the fourth fabric quantity is larger than the fifth fabric quantity, the processor arranges the third subset behind the fourth subset.

6. The fabric searching system of claim 4 or 5, wherein
the first fabric feature, the second fabric feature and the third fabric feature correspond to fabric texture characteristic data and the fourth fabric feature and the fifth fabric feature correspond to fabric application data, or
the first fabric feature, the second fabric feature and the third fabric feature correspond to the fabric application data and the fourth fabric feature and the fifth fabric feature correspond to fabric specification data, or
the first fabric feature, the second fabric feature and the third fabric feature correspond to the fabric specification data and the fourth fabric feature and the fifth fabric feature correspond to fabric touch characteristic data, or
the first fabric feature, the second fabric feature and the third fabric feature correspond to the fabric touch characteristic data and the fourth fabric feature and the fifth fabric feature correspond to fabric color image data, or
the first fabric feature, the second fabric feature and the third fabric feature correspond to the fabric color image data and the fourth fabric feature and the fifth fabric feature correspond to fabric supplier data.

7. The fabric searching system of claim 2, wherein the processor is further configured to store a second selected fabric data group in the second fabric data group into the user database according to the user information,
after the second selected fabric data group is stored into the user database, the processor is further configured to select, in the fabric database, a third fabric data group (FB3) conformed to a third fabric searching condition, and arrange the third fabric data group according to the first selected fabric data group and the second selected fabric data group, and
the display is further configured to display the third fabric data group which is arranged according to the first selected fabric data group and the second selected fabric data group.

8. The fabric searching system of claim 7, wherein
the second selected fabric data group includes a sixth selected data set having the first fabric feature and a seventh selected data set having the second fabric feature,
the third fabric data group includes a fourth fabric data set (SFB4) having the first fabric feature and a fifth fabric data set (SFB5) having the second fabric feature,
the processor is further configured to sum a sixth fabric quantity of the sixth selected data set and the first fabric quantity to generate a first total fabric quantity,
the processor is further configured to sum a seventh fabric quantity of the seventh selected data set and the second fabric quantity to generate a second total fabric quantity,
the processor is further configured to compare the first total fabric quantity and the second total fabric quantity,
when the first total fabric quantity is larger than the second total fabric quantity, the processor arranges the fourth fabric data set in front of the fifth fabric data set, and
when the first total fabric quantity is smaller than the second total fabric quantity, the processor arranges the fourth fabric data set behind the fifth fabric data set.

9. The fabric searching system of claim 1, 4 or 8, wherein
the display is further configured to display a picture (S6), and the picture includes a first image (M61), a second image (M62) and a third image (M63) different from each other,
in response to an user identity signal (SID2) corresponding to the first image, the processor controls the display to display a first search condition picture (S71),
in response to the user identity signal corresponding to the second image, the processor controls the display to display a second search condition picture (S72),
in response to the user identity signal corresponding to the third image, the processor controls the display to display a third search condition picture (S73),
the first search condition picture includes a first condition control image (M71),
the second search condition picture includes the first condition control image and a second condition control image(M72),
the third search condition picture includes the first condition control image, the second condition control image and a third condition control image(M73),
the first condition control image, the second condition control image and the third condition control image correspond to a first condition, a second condition and a third condition in the first fabric searching condition, respectively, and
the first condition, the second condition and the third condition are different from each other.

10. The fabric searching system of claim 9, wherein the first condition, the second condition and the third condition correspond to fabric texture characteristic data, fabric application data and fabric specification data, respectively,
the second search condition picture does not include the third condition control image, and
the first search condition picture does not include the third condition control image and the second condition control image.

## Amended claims

### Amended claims in accordance with Rule 137(2) EPC.

1. A fabric searching system (100), comprising:
a memory (120) configured to store a fabric database (122) and a user database (124) corresponding to user information (SID1);
a processor (130) configured to select, in the fabric database, a first fabric data group (FB1) conformed to a first fabric searching condition, and store a first selected fabric data group in the first fabric data group into the user database according to the user information; and
a display (110) configured to display the first fabric data group,
wherein after the first selected fabric data group is stored into the user database, the processor is further configured to select, in the fabric database, a second fabric data group (FB2) conformed to a second fabric searching condition, and arrange the second fabric data group according to the first selected fabric data group, and
the display is further configured to display the second fabric data group which is arranged according to the first selected fabric data group,
the first selected fabric data group includes a first selected data set having a first fabric feature and a second selected data set having a second fabric feature,
the first fabric feature and the second fabric feature are different from each other,
the second fabric data group includes a first fabric data set (SFB1) having the first fabric feature and a second fabric data set (SFB2) having the second fabric feature,
the processor is further configured to compare a first fabric quantity of the first selected data set and a second fabric quantity of the second selected data set,
when the first fabric quantity is larger than the second fabric quantity, the processor arranges the first fabric data set in front of the second fabric data set,
when the first fabric quantity is smaller than the second fabric quantity, the processor arranges the first fabric data set behind the second fabric data set.

2. The fabric searching system of claim 1, wherein
the first selected fabric data group further includes a third selected data set having a third fabric feature,
the third fabric feature is different from the first fabric feature, and is different from the second fabric feature,
the second fabric data group further includes a third fabric data set (SFB3) having the third fabric feature,
the processor is further configured to compare the first fabric quantity, the second fabric quantity and a third fabric quantity of the third selected data set,
when the first fabric quantity is larger than the second fabric quantity and the second fabric quantity is larger than the third fabric quantity, the processor arranges the first fabric data set, the second fabric data set and the third fabric data set in order, and
when the first fabric quantity is smaller than the second fabric quantity and the second fabric quantity is smaller than the third fabric quantity, the processor arranges the third fabric data set, the second fabric data set and the first fabric data set in order.

3. The fabric searching system of claim 2, wherein
the first selected fabric data group further includes a fourth selected data set having a fourth fabric feature and a fifth selected data set having a fifth fabric feature,
the fourth fabric feature and the fifth fabric feature are different from each other,
the first fabric data set includes a first subset (SS1) having the fourth fabric feature and a second subset (SS2) having the fifth fabric feature,
the processor is further configured to compare a fourth fabric quantity of the fourth selected data set and a fifth fabric quantity of the fifth selected data set,
when the fourth fabric quantity is larger than the fifth fabric quantity, the processor arranges the first subset in front of the second subset,
when the fourth fabric quantity is smaller than the fifth fabric quantity, the processor arranges the first subset behind the second subset.

4. The fabric searching system of claim 3, wherein
the second fabric data set includes a third subset (SS3) having the fourth fabric feature and a fourth subset (SS4) having the fifth fabric feature,
when the fourth fabric quantity is larger than the fifth fabric quantity, the processor arranges the third subset in front of the fourth subset,
when the fourth fabric quantity is larger than the fifth fabric quantity, the processor arranges the third subset behind the fourth subset.

5. The fabric searching system of claim 3 or 4, wherein
the first fabric feature, the second fabric feature and the third fabric feature correspond to fabric texture characteristic data and the fourth fabric feature and the fifth fabric feature correspond to fabric application data, or
the first fabric feature, the second fabric feature and the third fabric feature correspond to the fabric application data and the fourth fabric feature and the fifth fabric feature correspond to fabric specification data, or
the first fabric feature, the second fabric feature and the third fabric feature correspond to the fabric specification data and the fourth fabric feature and the fifth fabric feature correspond to fabric touch characteristic data, or
the first fabric feature, the second fabric feature and the third fabric feature correspond to the fabric touch characteristic data and the fourth fabric feature and the fifth fabric feature correspond to fabric color image data, or
the first fabric feature, the second fabric feature and the third fabric feature correspond to the fabric color image data and the fourth fabric feature and the fifth fabric feature correspond to fabric supplier data.

6. The fabric searching system of claim 1, wherein the processor is further configured to store a second selected fabric data group in the second fabric data group into the user database according to the user information,
after the second selected fabric data group is stored into the user database, the processor is further configured to select, in the fabric database, a third fabric data group (FB3) conformed to a third fabric searching condition, and arrange the third fabric data group according to the first selected fabric data group and the second selected fabric data group, and
the display is further configured to display the third fabric data group which is arranged according to the first selected fabric data group and the second selected fabric data group.

7. The fabric searching system of claim 6, wherein
the second selected fabric data group includes a sixth selected data set having the first fabric feature and a seventh selected data set having the second fabric feature,
the third fabric data group includes a fourth fabric data set (SFB4) having the first fabric feature and a fifth fabric data set (SFB5) having the second fabric feature,
the processor is further configured to sum a sixth fabric quantity of the sixth selected data set and the first fabric quantity to generate a first total fabric quantity,
the processor is further configured to sum a seventh fabric quantity of the seventh selected data set and the second fabric quantity to generate a second total fabric quantity,
the processor is further configured to compare the first total fabric quantity and the second total fabric quantity,
when the first total fabric quantity is larger than the second total fabric quantity, the processor arranges the fourth fabric data set in front of the fifth fabric data set, and
when the first total fabric quantity is smaller than the second total fabric quantity, the processor arranges the fourth fabric data set behind the fifth fabric data set.

8. The fabric searching system of claim 1, 3 or 7, wherein
the display is further configured to display a picture (S6), and the picture includes a first image (M61), a second image (M62) and a third image (M63) different from each other,
in response to an user identity signal (SID2) corresponding to the first image, the processor controls the display to display a first search condition picture (S71),
in response to the user identity signal corresponding to the second image, the processor controls the display to display a second search condition picture (S72),
in response to the user identity signal corresponding to the third image, the processor controls the display to display a third search condition picture (S73),
the first search condition picture includes a first condition control image (M71),
the second search condition picture includes the first condition control image and a second condition control image(M72),
the third search condition picture includes the first condition control image, the second condition control image and a third condition control image(M73),
the first condition control image, the second condition control image and the third condition control image correspond to a first condition, a second condition and a third condition in the first fabric searching condition, respectively, and
the first condition, the second condition and the third condition are different from each other.

9. The fabric searching system of claim 8, wherein the first condition, the second condition and the third condition correspond to fabric texture characteristic data, fabric application data and fabric specification data, respectively,
the second search condition picture does not include the third condition control image, and
the first search condition picture does not include the third condition control image and the second condition control image.
